# EUROPÄISCHE PATENTANMELDUNG

(11) **EP 4 835 591 A1**
(43) Veröffentlichungstag der Anmeldung: **04.11.2026**
(21) Anmeldenummer: 25173228.5
(22) Anmeldetag: 29.04.2025
(51) Int. Cl.: G05B 19/042

(54) **VERFAHREN UND ANORDNUNG ZUM VERFAHREN ZUR INTEGRITÄTSÜBERPRÜFUNG EINER ODER MEHRERER GERÄTEKOMPONENTEN EINER INDUSTRIELLEN AUTOMATISIERUNGSANLAGE**

(71) Anmelder: Siemens Aktiengesellschaft, 80333 München (DE)
(72) Erfinder: Becker, Stefan, 91325 Adelsdorf (DE); Falk, Rainer, 85435 Erding (DE); Feist, Christian Peter, 82284 Grafrath (DE); Scholz, Andreas, 85635 Höhenkirchen-Siegertsbrunn (DE); Sowinski, Dominik, 96047 Bamberg (DE); Waschbusch, Ralf, 73265 Dettingen unter Teck (DE)
(74) Vertreter: Siemens Patent Attorneys

(57) **Zusammenfassung**

Die Erfindung betrifft ein computer-implementiertes Verfahren zur Konfigurationsüberprüfung einer oder mehrerer Gerätekomponenten (D, HWPLC, RIO), welche in einer industriellen Automatisierungsanlage installiert sind und welche mit einem Cloudserver (SERV), der zumindest einen Software-Dienst (SaaS) für die jeweilige Gerätekomponente bereitstellt, verbunden sind, aufweisend folgende Schritte:
- Ermitteln von Konfigurationsdaten (CEE) der einen oder mehreren installierten Gerätekomponenten durch eine Sammeleinheit (CCR);
- Bereitstellen der Konfigurationsdaten durch die Sammeleinheit an eine außerhalb der Automatisierungsanlage befindlichen Konfigurationsprüfungsstelle (HC), in welcher eine oder mehrere Richtlinien (SRPA, SRPB,..., SRPZ) für die Nutzung des einen oder mehreren Software-Diensten eingerichtet sind,
- Ermitteln einer Konfigurationsbewertungsinformation (CCTM) der einen oder mehreren Gerätekomponenten durch die Konfigurationsprüfungsstelle, die die bereitgestellten Konfigurationsdaten mit Hilfe der Richtlinien prüft und die die Konfigurationsbewertungsinformation an den genannten Cloudserver bereitstellt, und
- Anpassen des Verhaltens des einen oder mehrerer Software-Dienste, der/die von der einen oder mehreren Gerätekomponente angefordert wird/werden, abhängig von der Auswertung der Konfigurationsbewertungsinformation durch den Cloudserver.

## Beschreibung

Die Erfindung betrifft ein Verfahren und eine Anordnung zum Verfahren zur Integritätsüberprüfung einer oder mehrerer Gerätekomponenten, welche in einer industriellen Automatisierungsanlage installiert sind und welche mit mindestens einen Software-Dienst (SaaS = Software as a Service) bereitstellenden Cloudserver zur Software-Dienstnutzung verbindbar und/oder verbunden sind.

### Hintergrund der Erfindung

Es besteht ein Bedarf, Geräte (z.B. Steuergeräte, Internet-der-Dinge (loT)-Geräte), Gerätekomponenten und/oder Softwarekomponenten vor Manipulationen und/oder einem Reverse Engineering zu schützen. In einer Automatisierungsanlage nehmen Geräte wie beispielsweise Programmable Logic Controller (PLC) Dienste für den operativen Betrieb in Anspruch, die zunehmend als Software in der Cloud angeboten (Software-as-a-Service; SaaS) werden. Solche Dienste können z.B. für Predictive-Maintenance, Parameteroptimierung von Maschinen, App- und Gerätemanagement, Cloud-basiertes Engineering, Cloud-basierte Steuerung verwendet werden. Diese können beispielsweise an spezielle Performanceorientierte oder nutzungsabhängige Bezahlmodelle, Subscription-basierte Nutzung geknüpft sein, oder sie setzen eine verlässliche Ausführung / Verwendung der bereitgestellten Daten voraus. Dabei kommunizieren bei einem Betreiber in einer Automatisierungsanlage z.B. die in der Fabrik installierten Gerätekomponenten (z.B. PLC, Gateway, Edge Device, ...) mit dem Cloud-basierten Software-Dienst, um dessen Funktionalität zu nutzen. Ein Cloud-basierter Software-Dienst kann insbesondere in einer Backend-Cloud, in einem Rechenzentrum oder einem Edge-Cloud-Server realisiert sein.

Es ist möglich, eine Systemintegritätsprüfung (Runtime Health Check Funktionalität) zur Laufzeit zu verwenden, um generell die Integrität von kritischen Systemressourcen (z.B. Dateien, Prozesse, Read-Only Speicherbereiche einer PLC) zur Laufzeit zu überprüfen. Diese Funktionalität kann beispielsweise als eigenständiger Prozess auf einem Gerät (Health Check Agent) oder als Task auf einem Echtzeitbetriebssystem realisiert sein. Die Prüfung findet dabei durch Abgleich mit einer Überwachungsrichtlinie (z.B. OEM Policy, Betreiber Policy) statt. In einem Satz an Richtlinien kann dabei z.B. definiert werden, wie auf erkannte Abweichungen reagiert werden soll (z.B. Setzen eines Schaltsignals, Übermitteln einer Log-Nachricht, etc.).

Des Weiteren ist eine sog. Remote-Attestierung (engl. "remote attestion") möglich, wodurch einem Teilnehmer / Peer ("relying party") Informationen zu einem Gerät / System bereitgestellt werden, anhand derer er verifizieren kann, ob sich das Gerät oder System in einem erwarteten (insb. vertrauenswürdigen) Zustand befindet. Die Hinzunahme von Hardware-Security Mechanismen ist insbesondere vorteilhaft im Zusammenhang mit Measured Boot und einem Trusted Platform Module (TPM). Somit kann der Zugang des Gerätes zu einem Service, oder allgemein einem Netzwerk, in Abhängigkeit der gemessenen Boot-Komponenten kontrolliert werden.

Um im oben genannten Kontext einen solchen Dienst (Service) nutzen zu können, werden bestimmte Konfigurationen bzw. Zustände bei den installierten Gerätekomponenten vorausgesetzt. Dabei reichen die oben genannte lokale Systemintegritätsprüfung und ein abgesicherter Boot-Mechanismus nicht aus, um eine vertrauenswürdige Nutzung eines solchen Dienstes zu gewährleisten.

Es ist zudem möglich, Geräteeigenschaften für ein sogenanntes Zero Trust Szenario zu ermitteln und auszuwerten. Eigenschaften wie z.B. Verwendung von BitLocker, MS Defender Endpoint Risk Level, Secure Boot können aktiviert, auf dem Gerät durch eine spezielle Komponente ermittelt und an eine dedizierte Stelle in der Infrastruktur übermittelt werden. Diese Stelle kann die Eigenschaften bzgl. Konformität zu bestimmten Richtlinien überprüfen, um ein Erlauben bzw. Ablehnen von Zugriffen zu veranlassen.

Es ist Aufgabe der vorliegenden Erfindung, ein Verfahren und eine Anordnung zur Überprüfung von Konfigurationen bei installierten Geräten insbesondere innerhalb einer Automatisierungsanlage anzugeben, welches gegenüber dem eingangs Genannten einen verbesserten Schutz und korrekten Ablauf von durch ein Gerät angeforderten Diensten aufweist.

### Zusammenfassung der Erfindung

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein Aspekt der Erfindung ist ein computer-implementiertes Verfahren zur Konfigurationsüberprüfung einer oder mehrerer Gerätekomponenten, welche in einer industriellen Automatisierungsanlage installiert sind und welche mit einem Cloudserver, der zumindest einen Software-Dienst für die jeweilige Gerätekomponente bereitstellt, verbunden sind, aufweisend folgende Schritte:
- Ermitteln von Konfigurationsdaten der einen oder mehreren installierten Gerätekomponenten durch eine Sammeleinheit;
- Bereitstellen der Konfigurationsdaten durch die Sammeleinheit an eine außerhalb der Automatisierungsanlage befindlichen Konfigurationsprüfungsstelle, in welcher eine oder mehrere Richtlinien für die Nutzung des einen oder der mehreren Software-Dienste eingerichtet sind,
- Ermitteln einer Konfigurationsbewertungsinformation der einen oder mehreren Gerätekomponenten durch die Konfigurationsprüfungsstelle, die die bereitgestellten Konfigurationsdaten mit Hilfe der Richtlinien prüft und die die Konfigurationsbewertungsinformation an den genannten Cloudserver bereitstellt, und
- Anpassen des Verhaltens des einen oder mehrerer Software-Dienste, der/die von der einen oder mehreren Gerätekomponente angefordert wird/werden, abhängig von der Auswertung der Konfigurationsbewertungsinformation durch den Cloudserver.

Die Konfigurationsdaten können kryptographisch geschützt (z.B. digitale Signatur und/oder Verschlüsselung) sein.

Die Richtlinien können sich z.B. auf Echtzeitanforderungen, Erlaubnis nur bestimmter Hersteller von Software, vorgegebenen Konfigurationen auf der Gerätekomponente beziehen. Das Verhalten kann die Nutzbarkeit und/oder Funktionalität und/oder von Privilegien des Software-Dienstes betreffen. Die Sammeleinheit kann hierbei in eine Gerätekomponente integriert oder mit einer oder mehreren Gerätekomponenten gekoppelt sein.

Erfindungsgemäß wird die Konfiguration einer Geräteinstallation vor allem in einer Automatisierungsanlage auf Plausibilität, Konsistenz und/oder Integrität überprüft, um abhängig vom Überprüfungsergebnis die Verwendung von bestimmten Software-Diensten zu kontrollieren.

Ein Software-Dienst kann beispielsweise ein Predictive-Maintenance, eine Parameteroptimierung von Maschinen, ein App- und Gerätemanagement, eine Cloud-basiertes Engineering bzw. eine Cloud-basierte Steuerung sein. Das Verhalten des Software-Dienstes kann entsprechend anpasst werden, z.B. durch Unterbrechen oder Einschränken der Verfügbarkeit bzw. Zugriffsrechte bzw. Funktionalität des Dienstes. So kann ein Dienst beispielsweise zwei Funktionalitäts-Varianten (Basis-Funktionalität, Voll-Funktionalität) vorsehen, von denen eine abhängig von der Übereinstimmung der Konfigurationsdaten der einen oder mehreren installierten Gerätekomponenten mit der zumindest einen Richtlinie zur Anwendung kommt. So können vor allem Software-Dienste und deren Nutzung an bestimmte Voraussetzungen der Geräteinstallation geknüpft werden. Das Verhalten des Software-Dienstes kann weiterhin die zulässige, mögliche Rate von Anfragen an den Dienst anpasst werden, oder es kann eine Antwort des Dienstes davon abhängig verzögert bereitgestellt werden.

Beispielsweise sollten bei einer Cloud-basierten Parameteroptimierung von Maschinen Softwarekomponenten der Maschine zur Bereitstellung der Maschinenidentität in einem vertrauenswürdigen Zustand sein, wenn die Parameteroptimierung pro Maschine separat lizenziert wird. Es soll durch Anpassen des Verhaltens der Parameteroptimierung beispielsweise verhindert werden, dass eine veränderte / manipulierte Maschine als Eingangstor für einen größeren Maschinenpark verwendet werden kann.

Ein Cloud-basiertes Engineering bzw. eine Cloud-basierte Steuerung sollte z.B. nur dann nutzbar sein, wenn sichergestellt werden kann, dass ein (Edge-)Gerät zur Ausführung von Automatisierungsprogrammen so konfiguriert ist, dass die Echtzeitfähigkeit der Ausführung gewährleistet wird. So kann eine verlässliche Steuerung sichergestellt werden.

In einem Energy Performance Contracting Szenario, in dem eine Energieverbrauchsreduktion z.B. um 10% vereinbart wurde, soll verhindert werden, dass durch eine (ggf. bewusst) fehlerhafte Gerätekonfiguration Zahlungen verweigert werden können.

Eine Weiterbildung der Erfindung sieht vor, dass die genannte Sammeleinheit die Anzahl der in der industriellen Automatisierungsanlage installierten Gerätekomponenten verwaltet und damit eine Neuinstallation und/oder Deinstallation einer Gerätekomponente erkennen kann, wobei die Information über eine oder mehrere neuinstallierte und/oder deinstallierte Gerätekomponenten in die Konfigurationsbewertungsinformation eingeht. Bei der Ermittlung der Plausibilität einer Geräteinstallation wird die Integrität der Kundeninstallation überprüft, d.h. es wird überprüft, ob eine Anzahl (Mehrzahl, Vielzahl) von Komponenten der Kundeninstallation integer, d.h. die erwartete Komponente ist, und ob sie jeweils nicht manipuliert sind.

Die Konfigurationsbewertungsinformation kann eine Metrik umfassen, die auf einer Anzeigevorrichtung visuell darstellbar ist und/oder dargestellt wird. Die Metrik kann Binärwerte, einen Vektor mit Binärwerten, einen prozentualen Gesamtscore ggf. mit vorgegebenen Schwellwert umfassen.

Ein weiterer Aspekt der Erfindung ist eine Sammeleinheit zum Ermitteln und Bereitstellen von Konfigurationsdaten von wenigstens einer installierten Gerätekomponente innerhalb einer Automatisierungsanlage, welche mit einem Cloudserver, der zumindest einen Software-Dienst für die jeweilige Gerätekomponente bereitstellt, verbunden sind, die dazu ausgebildet ist, Konfigurationsdaten der installierten Gerätekomponenten zu ermitteln und die Konfigurationsdaten an eine Konfigurationsprüfungsstelle, welcher eine oder mehrere Richtlinien für die Nutzung des zumindest einen Software-Dienstes vorliegen, bereitzustellen. In einer Ausführungsform kann auch eine Referenz (z.B. kryptographischer Hash-Wert) der Konfiguration ermittelt und bereitgestellt werden.

Ein weiterer Aspekt der Erfindung ist eine Konfigurationsprüfungsstelle, in welcher eine oder mehrere Richtlinien für die Nutzung eines oder mehrerer von einem Cloudserver bereitgestellten Software-Diensten eingerichtet sind, wobei die Konfigurationsprüfungsstelle dazu ausgelegt ist, eine Konfigurationsbewertungsinformation der einen oder mehreren Gerätekomponenten durch Prüfung der bereitgestellten Konfigurationsdaten mit Hilfe der Richtlinien zu ermitteln und an den Cloudserver bereitzustellen.

Ein weiterer Aspekt der Erfindung ist eine Anordnung zur Durchführung des Verfahrens, aufweisend mindestens eine solche Sammeleinheit, die mit einem zumindest einen Software-Dienst bereitstellenden Cloudserver verbunden ist, sowie eine solche Konfigurationsprüfungsstelle, wobei der Cloudserver dazu ausgelegt ist, das Verhalten des zumindest einen Software-Dienstes abhängig von der Auswertung der Konfigurationsbewertungsinformation anzupassen.

Das Computerprogrammprodukt umfassend computerausführbare Anweisungen, welche, wenn in ein Gerät (z.B. Computer) geladen, zur Durchführung eines Verfahrens nach der oben genannten Art und Ausführungsformen ausgelegt sind.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einem Gerät/Modul bzw. Vorrichtung der vorstehend genannten Art ablaufen oder als Computerprogrammprodukt auf einem computerlesbaren Medium gespeichert sein.

Die Anordnungen, Vorrichtungen, Einrichtungen, Einheiten bzw. Geräte, Module, Prüfungsstellen und Computerprogramm(produkte) können entsprechend der Weiterbildungen/Ausführungsformen des vorgenannten Verfahrens und deren Weiterbildungen/Ausführungsformen und umgekehrt ausgebildet sein.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung. Die Zahlen in Kreisen deuten Verfahrensschritte an.

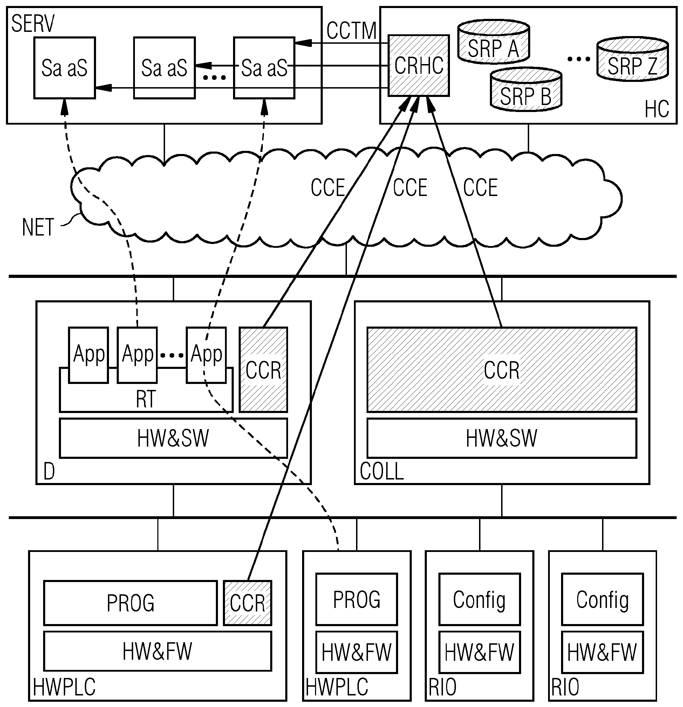

Die Figur zeigt in schematischer Weise eine Anordnung, innerhalb derer das erfindungsgemäße
Verfahren ablaufen kann.

### Detaillierte Beschreibung der Erfindung und ihrer Ausführungsbeispiele

Die Figur zeigt eine Automatisierungsanlage mit mehreren Automatisierungsgeräten in einer Geräteinstallation, wie z.B. mehrere Hardware PLCs HWPLC, Remote-IO Komponenten RIO, ein App-fähiges Edge-Gerät D, einen zusätzlichen IPC / Rack Server COLL speziell zum Sammeln von Konfigurationsdaten CCE. Zudem sind mehrere Software-Dienste SaaS, welche auf einem Cloudserver SERV über ein Netzwerk NET angeboten/bereitgestellt werden, dargestellt, die durch Komponenten z.B. HWPLC und/oder Applikationen App in der Geräteinstallation verwendet werden. Solche Dienste können z.B. für Predictive-Maintenance Szenarien, Cloud-basiertem Engineering, Cloud-basierter Steuerung, Geräte- und App-Management bzw. Subscription-Dienste verwendet werden.

Erfindungsgemäß enthalten Geräte, d.h. Gerätekomponenten, z.B. D, HWPLC, RIO der Geräteinstallation eine Sammeleinheit CCR (Customer Configuration Reporting) zum Ermitteln von Konfigurationsdaten CCE der jeweiligen Geräte. Diese sammelt gerätebezogene Konfigurationsdaten bzgl. der Software und Konfiguration der jeweiligen Geräte. Beispielsweise kann die Sammeleinheit einer Hardware-PLC Informationen zur Firmware (kryptographische Prüfsummen, Versionsnummern, Patching-Stand), zur Hardware (Seriennummer, Identifikationsinformation angeschlossener Peripherie-Baugruppen), welche zusammengefasst mit HW&FW gekennzeichnet sind, sowie zur Anwenderprogrammierung PROG ermitteln und bereitstellen. Die Sammeleinheit CCR eines Edge-Gerätes D kann beispielsweise Konfigurationsdaten zu den installierten Applikationen App (Hersteller, Konfiguration, kryptographischer Hash der Programmbinärdateien), Basis-Software und Konfiguration (z.B. UEFI Secure Boot Zustand) sowie der darunterliegenden Hardware (Seriennummer, Hersteller), welche zusammen mit HW&SW gekennzeichnet sind, ermitteln und bereitstellen. Durch die ermittelten Konfigurationsdaten kann der Zustand der aktuellen Konfiguration der Geräteinstallation (Hardware und Software der Geräte, geladene Apps und Automatisierungsprogramme, etc.) festgehalten werden. Insbesondere können die Informationen zu einzelnen Geräten zu einer Information bzgl. einer Teil- oder Gesamtinstallation einer Automatisierungsanlage zusammengeführt werden. Weiterhin können auch Eigenschaften der Netzwerktopologie (z.B. Zonen, Firewall- und Routingeinstellungen) von Netzwerkkomponenten ermittelt werden.

In einer Ausführungsform können Konfigurationsdaten von Geräten auch durch einen dedizierte, im gleichen Netzwerk befindlichen IPC / Rack Server COLL, der eine Sammeleinheit CCR umfasst, ermittelt werden. Dies ist insbesondere dann vorteilhaft, wenn eine Automatisierungs- oder Netzwerkkomponente selbst keine Sammeleinheit besitzt. Die Ermittlung kann beispielsweise über entsprechende Schnittstellen und Protokolle erfolgen (z.B. OPC UA, HTTP/REST, NETCONF/YANG, SNMP). Die Informationen/Daten können durch die Sammeleinheit noch erweitert werden, z.B. um Geräte-spezifische Informationen wie einer Geräte ID, eine Plattform-Attestierung der Sammeleinheit selbst, vorläufige Plausibilisierungsinformationen, Zeitstempel. Diese Sammeleinheit kann vorzugsweise besonders gegen Manipulationen geschützt sein, um eine vertrauenswürdige Ermittlung von Konfigurationsdaten zu gewährleisten. Die Sammeleinheit kann eine eigene Attestierung gegenüber der Konfigurationsprüfungsstelle HC bereitstellen, so dass die Vertrauenswürdigkeit der Ermittlung der Konfigurationsdaten verifiziert werden kann.

Die Sammeleinheit kann weiterhin ein Discovery (Erkennen), insbesondere ein netzwerkbasiertes Discovery, der Gerätekomponenten in der Geräteinstallation durchführen (z.B. durch Monitoring der Netzwerkkommunikation, oder durch Aktives Scannen des Netzwerks der Geräteinstallation, z.B. eines Maschinen-internen Netzwerks oder eines Zellen-Netzwerks). Die Sammeleinheit kann eine Information zu den erkannten Geräten der Geräteinstallation ermitteln und bereitstellen.

Die Konfigurationsdaten werden an eine Konfigurationsprüfungsstelle HC, welcher einen Cloud-basierten Gesundheitsprüfungs-Dienst CRHC zur Prüfung und Plausibilisierung der Konfigurationsdaten bereitgestellt. Dieser verwendet eine oder mehrere Regeln/Richtlinien SRPA, SRPB, ..., SRPZ (Policies; "SaaS RHC Policy") zur Überprüfung der Geräteinstallation. Dazu wird eine Installations-Konfigurations-Information verwendet, die die Gerätekomponenten der Geräteinstallation, sowie der erwarteten Konfiguration der Gerätekomponenten und / oder Teil- bzw. Gesamtinstallation angibt. Es kann sich dabei um eine kryptographisch geschützte Liste der Identitäten der Geräte der Geräteinstallation handeln. Vorzugsweise umfasst die Installations-Konfigurations-Information weiterhin eine Information zu zulässigen Software-/Konfigurationszuständen der Geräte. Weiterhin kann je Gerätekomponente eine Referenzinformation vorliegen, die es dem Dienst CRHC erlaubt, die Integrität der jeweiligen Gerätekomponente zu überprüfen. Es erfolgt dabei eine zweistufige Überprüfung - die Überprüfung der Gruppe von Gerätekomponenten der Geräteinstallation sowie jeweils die Überprüfung der Integrität der Gerätekomponenten.

In einer weiteren Ausführungsform wird überprüft, ob in der Menge/Liste erkannter Geräte der Geräteinstallation weitere Gerätekomponenten als erwartet enthalten sind. Eine Geräteinstallation kann als nicht integer erkannt werden, wenn zumindest eine nicht erwartete Gerätekomponente erkannt ist, d.h. wenn eine Gerätekomponente in der Geräteinstallation vorliegt, die nicht in der Installations-Konfigurations-Information enthalten ist, bzw. deren Konfiguration nicht der Referenzinformation entspricht.

Die Richtlinien können vorzugsweise spezifisch angepasst sein für den jeweiligen Software-Dienst SaaS und/oder für die jeweilige Geräteinstallation. Für eine verlässliche Cloud-basierte Steuerung kann ein Regel-/Richtlinienwerk beispielsweise beschreiben, dass Gerätekomponenten mit Echtzeitanforderungen entsprechend konfiguriert sein müssen (z.B. dass virtuelle PLC-Apps auf dedizierten CPU-Kernen laufen müssen). Für ein Predictive-Maintenance Szenario kann das Regelwerk beispielsweise beschreiben, dass nur die vom Maschinenbauer provisionierte Basis-Software, Konfiguration, Applikationen auf einem Edge-Gerät laufen dürfen. So kann beispielsweise ausgeschlossen werden, dass eine mehrfache Verwendung der gleichen Geräteinformation verwendet werden kann, um ein Subscriptionbasiertes Modell zu umgehen. Die Regelwerke sind vorzugsweise Softwaredienst-spezifisch konfiguriert. Weiterhin können Änderungen in gewissen Bereichen toleriert werden, z.B. dass weitere Applikationen auf einem Edge-Gerät installiert werden, sofern diese nicht durch erhöhte Privilegien einen möglichen Einfluss auf die Verlässlichkeit anderer Applikationen nehmen können. Das Ergebnis der Überprüfung stellt eine Konfigurationsbewertungsinformation CCTM ggf. mit einer Metrik für die Vertrauenswürdigkeit der Konfiguration einer Geräteinstallation dar. Diese Konfigurationsbewertungsinformation kann ein einfaches OK/NOK Ergebnis (in Ordnung / nicht in Ordnung), ein numerischer Wert, ein Vektor an Werten (die mehrere Eigenschaften beschreibt) sein.

Die Konfigurationsprüfungsstelle stellt die Konfigurationsbewertungsinformation(en) den jeweiligen Software-Diensten SaaS bereit. Diese können entsprechend der ermittelten Metrik reagieren. Kann so z.B. auf keine Ausführungsumgebung RT mit verlässlichen Echtzeiteigenschaften in der Automatisierungsanlage geschlossen werden, kann eine Cloud-basierte Steuerung ein anderes Automatisierungsprogramm ausführen (z.B., um in einen sicheren Zustand zu wechseln) oder die Ausführung des aktuellen Programms verlangsamt werden, um Schäden zu vermeiden, oder die Funktionalität beschränken (z.B. keine Parameteroptimierung vornehmen). Eine Reaktion / Anpassung des Software-Dienstes auf Basis einer Konfigurationsbewertungsinformation kann dem Anwender, Kunden, Betreiber transparent gemacht werden, z.B. durch das Melden als Log-Nachricht oder einer visuellen Anzeige in einer Anzeigevorrichtung (z.B. Web-Ul).

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Das Gerät D kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Computer-implementiertes Verfahren zur Konfigurationsüberprüfung einer oder mehrerer Gerätekomponenten (D, HWPLC, RIO), welche in einer industriellen Automatisierungsanlage installiert sind und welche mit einem Cloudserver (SERV), der zumindest einen Software-Dienst (SaaS) für die jeweilige Gerätekomponente bereitstellt, verbunden sind, aufweisend folgende Schritte:
- Ermitteln von Konfigurationsdaten (CEE) der einen oder mehreren installierten Gerätekomponenten durch eine Sammeleinheit (CCR);
- Bereitstellen der Konfigurationsdaten durch die Sammeleinheit an eine außerhalb der Automatisierungsanlage befindlichen Konfigurationsprüfungsstelle (HC), in welcher eine oder mehrere Richtlinien (SRPA, SRPB,..., SRPZ) für die Nutzung des einen oder mehreren Software-Diensten eingerichtet sind,
- Ermitteln einer Konfigurationsbewertungsinformation (CCTM) der einen oder mehreren Gerätekomponenten durch die Konfigurationsprüfungsstelle, die die bereitgestellten Konfigurationsdaten mit Hilfe der Richtlinien prüft und die die Konfigurationsbewertungsinformation an den genannten Cloudserver bereitstellt, und
- Anpassen des Verhaltens des einen oder mehrerer Software-Dienste, der/die von der einen oder mehreren Gerätekomponente angefordert wird/werden, abhängig von der Auswertung der Konfigurationsbewertungsinformation durch den Cloudserver.

2. Verfahren nach dem vorhergehenden Anspruch, **dadurch gekennzeichnet, dass** die Sammeleinheit (CCR) in eine Gerätekomponente integriert oder mit einer oder mehreren Gerätekomponenten gekoppelt ist.

3. Verfahren nach einem der vorhergehenden Ansprüche, **dadurch gekennzeichnet, dass** die genannte Sammeleinheit die Anzahl der in der industriellen Automatisierungsanlage installierten Gerätekomponenten verwaltet und damit eine Neuinstallation und/oder Deinstallation einer Gerätekomponente erkennen kann, wobei die Information über eine oder mehrere neuinstallierte und/oder deinstallierte Gerätekomponenten in die Konfigurationsbewertungsinformation eingeht.

4. Verfahren nach einem der vorhergehenden Ansprüche, **dadurch gekennzeichnet, dass** die Konfigurationsbewertungsinformation eine Metrik umfasst, die auf einer Anzeigevorrichtung visuell darstellbar ist und/oder dargestellt wird.

5. Sammeleinheit (CCR) zum Ermitteln und Bereitstellen von Konfigurationsdaten von wenigstens einer installierten Gerätekomponente innerhalb einer Automatisierungsanlage, welche mit einem Cloudserver (SERV), der zumindest einen Software-Dienst (SaaS) für die jeweilige Gerätekomponente bereitstellt, verbunden sind, die dazu ausgebildet ist, Konfigurationsdaten (CEE) der installierten Gerätekomponenten zu ermitteln und die Konfigurationsdaten an eine Konfigurationsprüfungsstelle, welcher eine oder mehrere Richtlinien (SRPA, SRPB,..., SRPZ) für die Nutzung des zumindest einen Software-Dienstes vorliegen, bereitzustellen.

6. Konfigurationsprüfungsstelle (HC), in welcher eine oder mehrere Richtlinien (SRPA, SRPB,..., SRPZ) für die Nutzung eines oder mehrerer von einem Cloudserver (SERV) bereitgestellten Software-Diensten (SaaS) eingerichtet sind, wobei die Konfigurationsprüfungsstelle (HC) dazu ausgelegt ist, eine Konfigurationsbewertungsinformation (CCTM) der einen oder mehreren Gerätekomponenten durch Prüfung der bereitgestellten Konfigurationsdaten mit Hilfe der Richtlinien zu ermitteln und an den Cloudserver bereitzustellen.

7. Anordnung zur Durchführung des Verfahrens nach einem der vorhergehenden Verfahrensansprüchen, aufweisend mindestens eine Sammeleinheit (CCR) nach dem vorhergehenden Anspruch 5, die mit einem zumindest einen Software-Dienst (SaaS) bereitstellenden Cloudserver (SERV) verbunden ist, sowie eine Konfigurationsprüfungsstelle nach Anspruch 6, wobei der Cloudserver dazu ausgelegt ist, das Verhalten des zumindest einen Software-Dienstes abhängig von der Auswertung der Konfigurationsbewertungsinformation (CCTM) anzupassen.

8. Computerprogrammprodukt umfassend computerausführbare Anweisungen, welche, wenn geladen in eine die Anweisungen verarbeitbaren Gerätekomponente, zur Durchführung eines Verfahrens nach einem der vorhergehenden Verfahrensansprüche ausgelegt sind.
